**Europäisches Patentamt**

**European Patent Office**

**Office européen des brevets**

(11) Veröffentlichungsnummer: **0 127 609**
**B1**

(12) **EUROPÄISCHE PATENTSCHRIFT**

(45) Veröffentlichungstag der Patentschrift:
25.11.87

(51) Int. Cl.⁴: **A 22 C 17/04**

(21) Anmeldenummer: **84890093.2**

(22) Anmeldetag: **23.05.84**

(54) Vorrichtung zur Abtrennung des Fleiches von Knochen.

(30) Priorität: **27.05.83 AT 1955/83**

(43) Veröffentlichungstag der Anmeldung:
**05.12.84 Patentblatt 84/49**

(45) Bekanntmachung des Hinweises auf die Patenterteilung:
**25.11.87 Patentblatt 87/48**

(84) Benannte Vertragsstaaten:
**DE FR GB**

(56) Entgegenhaltungen:
**DE-A-2 901 909**
**FR-A-2 356 375**
**GB-A-1 563 750**

(73) Patentinhaber: **Inject Star Pökelmaschinen Gesellschaft m.b.H., Innstrasse 23- 25, A-1200 Wien (AT)**

(72) Erfinder: **Prosenbauer, Otto, Innstrasse 23, A-1201 Wien (AT)**

(74) Vertreter: **Boeckmann, Peter, Dipl.Ing., Strohgasse 10, A-1030 Wien (AT)**

EP 0 127 609 B1

## Beschreibung

Die Erfindung bezieht sich auf eine Vorrichtung zur Abtrennung des Fleisches von Knochen, insbesondere für Geflügelteile, wie Hühner- oder Putenkarkassen, durch Verpressen der in den zylindrischen Preßraum einer Presse zwischen einen Preßkolben und einen Gegenkolben eingebrachten Fleisch-Knochen-masse, mit Durchtrittsöffnungen in der Wand des Preßraumes, durch welche das durch den Preßdruck in den pastenartigen Zustand übergeführte Fleisch hindurchtreten kann, wogegen die Knochen zurückgehalten werden, wobei beide Kolben in Achsrichtung des Preßraumes bewegbar sind und der Gegenkolben bei seiner vom Preßkolben weggerichteten Bewegung eine Austragsöffnung für die Abfuhr der verpreßten Knochen aus dem Preßraum freigibt, und wobei der Gegenkolben einen Verschlußabschnitt mit größerem Durchmesser als der Durchmesser des Preßraumes und einen mit weiteren Durchtrittsöffnungen für pastenartiges Fleisch versehenen Filterabschnitt mit kleinerem Durchmesser als der Durchmesser des Preßraumes aufweist, welcher Filterabschnitt in der Verschlußstellung des Gegenkolbens in den Preßraum hineinreicht, an seinem Umfang jedoch von der Wand des Preßraumes durch einen Ringraum getrennt ist.

Derartige Vorrichtungen sind bekannt (DE-A-2 901 909). Bei ihrem Betrieb treten häufig Fleischanteile der zu verpressenden Masse von bis zu 60 % auf, mitunter sogar darüberliegende Werte. Es besteht selbstverständlich der Wunsch, diese hohen Fleischanteile möglichst vollständig zu gewinnen, jedoch hat es sich gezeigt, daß dies mit den bekannten Vorrichtungen nur ungenügend möglich ist. Es kommt insbesondere bei der Verpressung von Geflügelteilen, z. B. Karkassen (das sind von den Flügel- und Beinteilen befreite Geflügelkörper) zu Verstopfungen der bisher üblichen Ringfilter, insbesondere durch die Hautanteile der zu verpressenden Masse. Dadurch sinkt die Ausbeute bis zur Funktionsstörung. Man hat versucht, diesem Nachteil durch einen mit einer Spitze ausgebildeten Gegenkolben zu begegnen, da anzunehmen war, daß dadurch der in radialer Richtung des Preßraumes auf das Preßgut wirkende Druck erhöht würde. Es hat sich aber gezeigt, daß das Filter dennoch verlegt bleibt, so daß die Ausbeute nicht an die gewünschten Werte herangeführt werden kann.

Die Erfindung bezweckt, diese Nachteile zu vermeiden und eine Vorrichtung der eingangs geschilderten Art so zu verbessern, daß bei geringem Aufwand eine weitgehend funktionsstörungsfreie Verpressung der erwähnten Preßmassen bei guter Fleischausbeute möglich ist. Die Erfindung löst diese Aufgabe dadurch, daß die Durchtrittsöffnungen in der Wand des Preßraumes zumindest im Bereich des Gegenkolbens im wesentlichen Kreisquerschnitt haben, daß auch der Filterabschnitt des Gegenkolbens solche Durchtrittsöffnungen an seinem Umfang hat und daß dieser Filterabschnitt über die axiale Länge eines von diesen Durchtrittsöffnungen gebildeten Lochfilters gleichen Außendurchmesser hat. Gegenüber der eingangs erwähnten bekannten Konstruktion wird also zunächst im Bereich des Gegenkolbens das bisher dort übliche Ringscheibenfilter durch ein Filter ersetzt, dessen Durchtrittsöffnungen im wesentlichen Kreisquerschnitt haben, vorzugsweise von radialen Bohrungen gebildet sind, also durch ein sogenanntes "Lochfilter", wogegen das Ringscheibenfilter in Umfangsrichtung der Ringe verlaufende, zwischen einander benachbarten Ringen bestehende, langgestreckte spaltförmige Durchtrittsöffnungen aufweist. Überraschenderweise hat es sich gezeigt, daß solche im wesentlichen Kreisquerschnitt aufweisende Durchtrittsöffnungen weniger stark zum Verlegen durch Haut neigen als die erwähnten, zwischen benachbarten Ringen verbleibenden langgestreckten Spalte. Gleiches gilt für den Filterabschnitt des Gegenkolbens, durch den Fleisch auch nach innen aus dem Preßraum abgeführt wird. Hiebei ist die gesamte axiale Länge dieses Filterabschnittes wirksam, da ja das Material durch den zwischen diesem Filterabschnitt und der Preßrauminnenwand bestehenden Ringraum zu den gesamten Durchtrittsöffnungen des Filterabschnittes gelangen kann. Dies trägt zur Steigerung der Ausbeute wesentlich bei.

Gemäß einer bevorzugten Ausführungsform der Erfindung ist der Filterabschnitt aus Ringen zusammengesetzt, die am Umfang die Durchtrittsöffnungen aufweisen, die in Sammelkanäle münden, welche in den Ringen vorhanden sind und in axialer und tangentialer Richtung verlaufen. Damit läßt sich das Lochfilter ebenfalls aus Ringen zusammensetzen, deren Durchtrittsöffnungen jedoch von Bohrungen im Ringmantel gebildet sind und nicht, wie bei einem üblichen Ringfilter, von spaltförmigen Öffnungen, die durch die Begrenzungsflächen zweier benachbarter Ringe berandet sind. Vorzugsweise ist hiebei im Sinne der Erfindung jeder Ring mit einer mittigen Öffnung auf einen die Ringe durchsetzenden Dorn des Gegenkolbens aufgesteckt und durch eine die Gegenkolbenstirnfläche bildende, am Dorn befestigte Abschlußplatte gehalten. Dies erleichtert die Reinigung des von den Ringen gebildeten Lochfilters. Die richtige Montage wird hiebei erleichtert, wenn gemäß einer Weiterbildung der Erfindung alle Ringe gleichen Außendurchmesser und vorzugsweise auch gleiche Form haben.

Die Durchtrittsöffnungen des Filterabschnittes können zu einem im Verschlußabschnitt vorgesehenen Abfuhrkanal führen, durch den das vom Lochfilter des Gegenkolbens laufend gewonnene pastenartige Fleisch abgeführt werden kann.

Vorzugsweise besteht im Rahmen der Erfindung zumindest das im Bereich des Gegenkolbens angeordnete Lochfilter, welches die Preßraumwand bildet, aus einem dünnwandigen, von Rundlöchern durchsetzten Mantel, welche Rundlöcher mit ihren Achsen in mehreren, in Richtung der Lochfilterachse gegeneinander versetzten Kreisen angeordnet sind, deren jeder konzentrisch zur Lochfilterachse liegt, wobei zwischen je zwei solchen Kreisen am Außenmantel des Lochfilters eine umlaufende Verstärkungsrippe angeordnet ist. Dies hat seinen Grund darin, daß die Lochfilteröffnungen zumeist sehr kleinen Durchmesser haben, der vorzugsweise zwischen etwa 1,2 und 2,0 mm liegt. Löcher mit einem derartigen Durchmesser lassen sich aber in starkwandiges Material nicht mehr verläßlich bzw. rationell bohren. Man muß daher auf dünnwandiges Mantelmaterial für das Lochfilter zurückgreifen, wodurch aber wiederum die Gefahr entsteht, daß der dünnwandige Lochfiltermantel dem auftretenden Preßdruck nicht mehr gewachsen ist. Dieser Gefahr wird durch die Verstärkungsrippen begegnet. Es ist hiebei zweckmäßig, das Lochfilter einstückig auszubilden, obwohl auch eine Zusammensetzung aus entsprechend profilierten Ringen möglich wäre, etwa in der Art, wie zuvor die Lochfilterausbildung des Gegenkolbens beschrieben wurde.

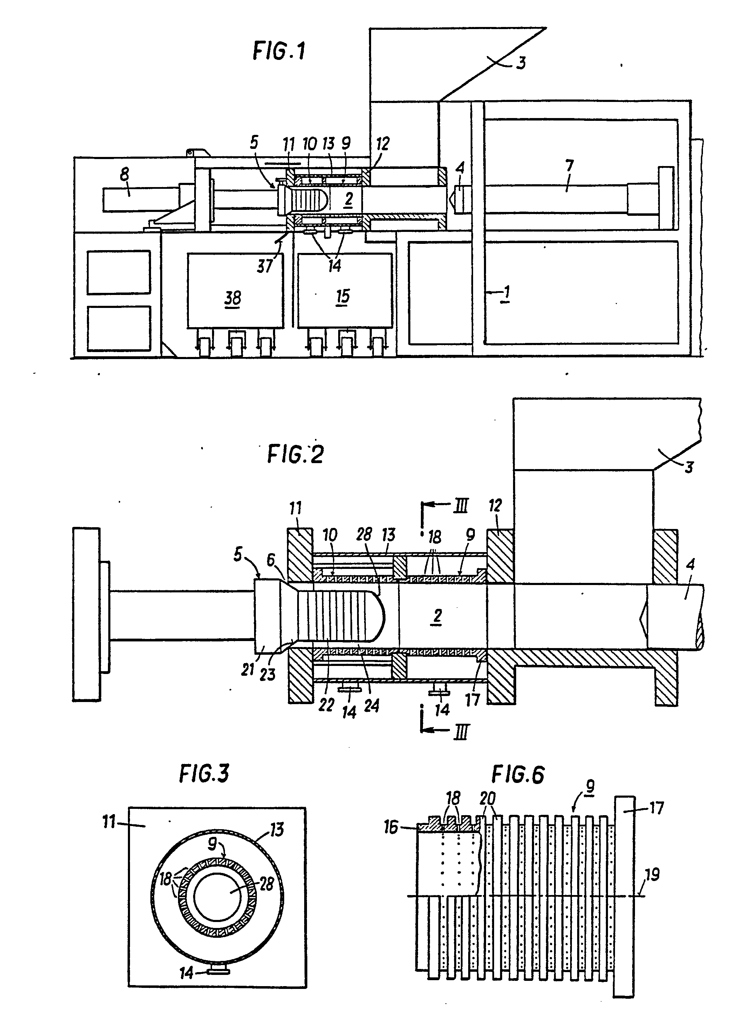

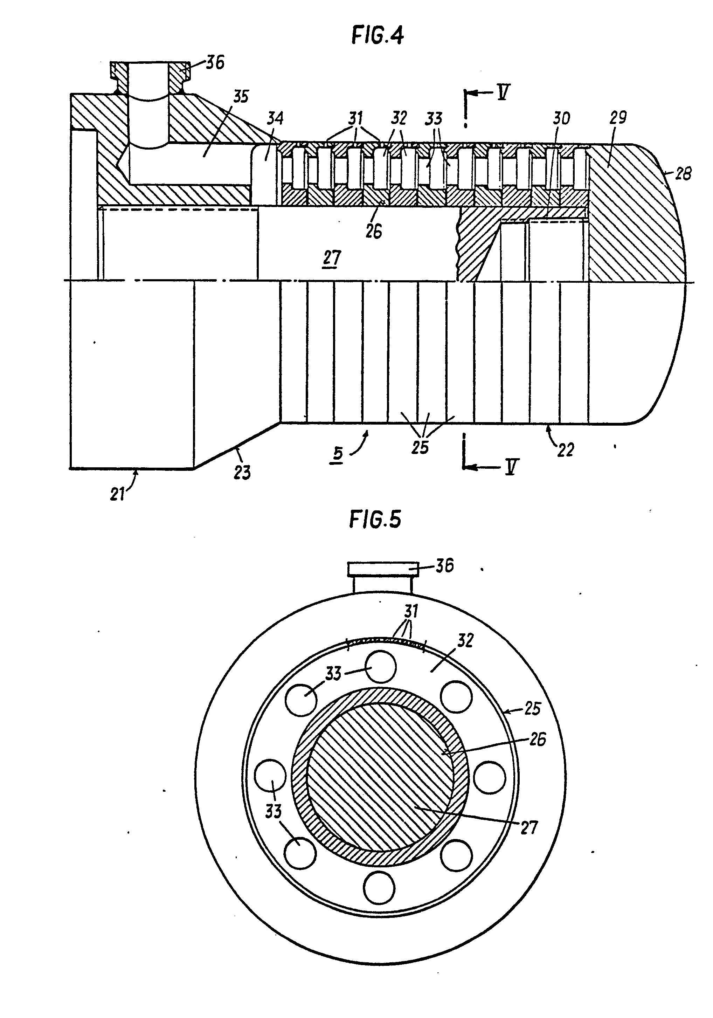

In der Zeichnung ist ein Ausführungsbeispiel der Erfindung schematisch veranschaulicht. Fig. 1 zeigt einen Vertikalschnitt durch die Vorrichtung. Fig. 2 zeigt in größerem Maßstab einen Vertikalschnitt durch den Preßraum samt den beiden Kolben. Fig. 3 ist ein Schnitt nach der Linie III - III der Fig. 2. Fig. 4 zeigt in größerem Maßstab die Ausbildung des Gegenkolbens im Axialschnitt und Fig. 5 ist ein Schnitt nach der Linie V - V der Fig. 4. Fig. 6 zeigt einen Axialschnitt durch ein Lochfilter.

Die Vorrichtung nach Fig. 1 hat ein Gestell 1, in welchem ein Preßraum 2 mit horizontaler Achse angeordnet ist, in den die zu verpressende Fleisch-Knochen-Masse durch einen Einfülltrichter 3 eingebracht werden kann. Im Preßraum 2 sind ein Preßkolben 4 und ein Gegenkolben 5 in axialer Richtung des Preßraumes 2 beweglich, welche beiden Kolben 4, 5 den Preßraum 2 an seinen beiden Stirnenden abschließen. In seiner völlig zurückgezogenen Stellung gibt der Gegenkolben 5 eine Austragsöffnung 6 für die verpreßten Knochen frei, durch die das verpreßte Knochenpaket vom Preßkolben 4 ausgeschoben wird. Die beiden Kolben 4, 5 werden von Druckmittelzylindern 7 bzw. 8, zweckmäßig hydraulisch, betätigt, die im Gestell 1 befestigt sind. In seiner völlig zurückgezogenen Stellung gibt der Preßkolben 4 die vom Einfülltrichter 3 in den Preßraum 2 führende Öffnung so weit frei, daß die in den Einfülltrichter 3 eingebrachte zu verpressende Masse in den Preßraum 2 ungehindert gelangen kann. Die Wand des Preßraumes 2 ist von zwei hintereinander angeordneten Lochfiltern 9, 10 gebildet, die zwischen zwei ortsfesten Wänden 11, 12 des Gestelles 1 gehalten sind. Das eine Lochfilter 10 ist in Fig. 6 in größerem Maßstab dargestellt. Die beiden Lochfilter 9, 10 sind von einem Auffangzylinder 13 für das durch den Preßdruck in den pastenartigen Zustand übergeführte Fleisch umgeben, der von Anschlußstutzen 14 für den Anschluß nicht dargestellter Schläuche durchsetzt ist, mit denen das Fleisch in einen Behälter, z. B. einen Transportwagen 15, geleitet werden kann.

Das Lochfilter 10 (Fig. 6) ist einstückig ausgebildet und hat einen verhältnismäßig dünnwandigen Mantel 16, der an einem Stirnende des Lochfilters 10 in einen Befestigungsflansch 17 übergeht. Der Mantel 16 ist von einer Vielzahl von Durchtrittsöffnungen 18 durchsetzt, die vom in den pastenartigen Zustand durchsetzten Fleisch passiert werden können, die Knochen jedoch zurückhalten. Jede Durchgangsöffnung 18 ist von einer Bohrung des Mantels 16 gebildet, wobei jedoch die Durchmesser der Bohrungen für das dem Einfülltrichter 3 näher liegende Lochfilter 9 etwas größer, vorzugsweise im Bereich von etwa 1,5 bis 2,0 mm sind als die Bohrungen im vom Einfülltrichter 3 weiter entfernten Lochfilter 10, deren Durchmesser zwischen etwa 1,2 und etwa 1,5 mm liegt. Die Durchtrittsöffnungen 18 sind in mehreren Kreisen konzentrisch zur Achse 19 des jeweiligen Lochfilters 9, 10 angeordnet, welche Kreise voneinander gleiche Abstände haben. Entlang jedes Kreises sind die Durchtrittsöffnungen 18 in gleichen Abständen voneinander verteilt angeordnet. Zwischen je zwei solcher Kreise liegt an der Außenfläche des Mantels 16 eine umlaufende Rippe 20, die den Mantel zur Aufnahme des im Preßraum 2 ausgeübten Preßdruckes verstärkt. Auf diese Weise wird dem einstückigen Lochfilter 9 bzw. 10 die nötige Festigkeit gegeben.

Der Gegenkolben 5 (Fig. 4, 5) hat zwei Abschnitte, nämlich einen Verschlußabschnitt 21 und einen Filterabschnitt 22, die über eine Kegelfläche 23 ineinander übergehen. Diese Kegelfläche 23 bildet nach Art eines Ventilkegels einen Abschluß für die Austragsöffnung 6 in der in Fig. 2 am weitesten rechts liegenden Stellung des Gegenkolbens 5. In dieser Stellung ragt der Filterabschnitt 22 in den Preßraum 2 hinein, und zwar so weit, daß sich der Filterabschnitt 22 fast über die gesamte axiale Länge des ihn umgebenden Lochfilters 10 der Preßraumwand erstreckt. Von dieser Preßraumwand ist der Filterabschnitt 22 jedoch durch einen Ringraum 24 getrennt, der dadurch gebildet ist, daß der Außendurchmesser des Filterabschnittes 22 durchwegs geringer ist als der Durchmesser 6 des Preßraumes 2. Dieser Filterabschnitt 22 ist als Lochfilter ausgebildet und hiezu aus einer Vielzahl von Ringen 25 (Fig. 4, 5) zusammengesetzt, die jeweils mit einer mittigen Öffnung 26 auf einen alle Ringe 25 durchsetzenden Dorn 27 aufgesetzt sind, der in den Verschlußabschnitt 21 des Gegenkolbens 5 eingeschraubt ist. An diesem Dorn 27 sind die Ringe 25 durch eine die bombierte Stirnfläche 28 des Gegenkolbens 5 bildende Abschlußplatte 29 gehalten, die mittels eines Gewindes 30 in das Stirnende des Dornes 27 eingeschraubt ist. Jeder Ring 25 hat an seinem Umfang eine Vielzahl von radialen Durchtrittsöffnungen 31 für das in den pastenartigen Zustand übergeführte Fleisch, deren Durchmesser und Ausbildung gleich sein kann wie jene der Durchtrittsöffnungen 18 des Lochfilters 10. Die Durchtrittsöffnungen 31 münden in in Umfangsrichtung der Ringe verlaufende, in diesen ausgesparte Sammelkanäle 32, die ihrerseits durch von Löchern in der Ringwand gebildete, in axialer Richtung verlaufende Sammelkanäle 33 verbunden sind. Alle Sammelkanäle 33 münden in einen Auffangraum 34 zwischen dem letzten Ring und dem Verschlußabschnitt 21, an welchen Auffangraum 34 ein Abfuhrkanal 35 im Verschlußabschnitt 21 angeschlossen ist, an den mittels eines Fittings 36 ein nicht dargestellter Schlauch anschließbar ist, über den die gewonnene pastöse Fleischmasse in den Transportwagen 15 geleitet werden kann.

Um zu verhindern, daß sich die Ringe 25 um die Achse des Dornes 27 drehen können, hat der Dorn 27 zweckmäßig einen nicht dargestellten, in seiner Längsrichtung verlaufenden keilförmigen Fortsatz, der in entsprechend ausgebildete Zentriernuten der Ringe eingreift. Die Ringe sind daher nur in einer vorbestimmten Stellung auf den Dorn 27 aufsteckbar. Zweckmäßig sind alle Ringe 25 gleich groß und gleich geformt, so daß die Reihenfolge ihres Aufsteckens auf den Dorn 27 belanglos ist. Dadurch werden Montagefehler vermieden.

Unter der Austragsöffnung 6 befindet sich eine Rutsche 37, über die das durch die Austragsöffnung 6 mittels des Preßkolbens 4 ausgeschobene verpreßte Knochenpaket in einen weiteren Transportwagen 38 fällt.

Im Betrieb der Vorrichtung wird die zu verpressende Masse, z. B. Hühner- oder Putenkarkassen, durch den Einfülltrichter 3 in den Preßraum 2 eingebracht, wobei der Preßkolben 4 ganz zurückgezogen und der Gegenkolben 5 in seine die Austragsöffnung 6 verschließende Lage gebracht ist. Nach der Befüllung des Preßraumes 2 wird der Preßkolben 4 gegen den Gegenkolben 5 zu vorgeschoben. Durch den dadurch im Preßraum 2 aufgebauten Druck wird das an den Knochen anhaftende Fleisch in den pastenartigen Zustand übergeführt und kann durch die Durchtrittsöffnungen 18 der Lochfilter 9, 10 sowie durch die Durchtrittsöffnungen 31 des Filterabschnittes 22 des Gegenkolbens 5 aus dem Preßraum 2 austreten. Nach Beendigung der Verpressung wird der Gegenkolben 6 zurückgezogen und das verbleibende Rückstandspaket durch weiteres Vorschieben des Preßkolbens 4 aus der Austragsöffnung 6 ausgeworfen. Es kann jedoch auch so verfahren werden, daß nach der Verpressung der ersten Charge der Gegenkolben 5 in seiner Abschlußlage verbleibt und der Preßkolben 4 soweit zurückgezogen wird, daß eine weitere Charge über den Einfülltrichter 3 in den Preßraum 2 eingebracht werden kann. Diese zweite Charge wird dann zusammen mit dem Rückstand der ersten Charge verpreßt. Diese Vorgangsweise kann mehrfach wiederholt werden, wobei sich der Rückstandskuchen vor dem Gegenkolben 5 bei jeder Charge entsprechend vergrößert. Nach Abschluß dieser Vorgänge erfolgt dann das Auswerfen des gesammelten Rückstandes wie vorhin beschrieben.

**Patentansprüche**

1. Vorrichtung zur Abtrennung des Fleisches von Knochen, insbesondere für Geflügelteile, wie Hühner- oder Putenkarkassen, durch Verpressen der in den zylindrischen Preßraum (2) einer Presse zwischen einen Preßkolben (4) und einen Gegenkolben (5) eingebrachten Fleisch-Knochen-Masse, mit Durchtrittsöffnungen (18) in der Wand des Preßraumes (2), durch welche das durch den Preßdruck in den pastenartigen Zustand übergeführte Fleisch hindurchtreten kann, wogegen die Knochen zurückgehalten werden, wobei beide Kolben (4, 5) in Achsrichtung des Preßraumes (2) bewegbar sind und der Gegenkolben (5) bei seiner vom Preßkolben (4) weggerichteten Bewegung eine Austragsöffnung (6) für die Abfuhr der verpreßten Knochen aus dem Preßraum (2) freigibt, und wobei der Gegenkolben (5) einen Verschlußabschnitt (21) mit größerem Durchmesser als der Durchmesser des Preßraumes (2) und einen mit weiteren Durchtrittsöffnungen (31) für pastenartiges Fleisch versehenen Filterabschnitt (22) mit kleinerem Durchmesser als der Durchmesser des Preßraumes (2) aufweist, welcher Filterabschnitt (22) in der Verschlußstellung des Gegenkolbens (5) in den Preßraum (2) hineinreicht, an seinem Umfang jedoch von der Wand des Preßraumes (2) durch einen Ringraum (24) getrennt ist, dadurch gekennzeichnet, daß die Durchtrittsöffnungen (18) in der Wand des Preßraumes (2) zumindest im Bereich des Gegenkolbens (5) im wesentlichen Kreisquerschnitt haben, daß auch der Filterabschnitt (22) des Gegenkolbens (5) solche Durchtrittsöffnungen (31) an seinem Umfang hat und daß dieser Filterabschnitt (22) über die axiale Länge seines von diesen Durchtrittsöffnungen (31) gebildeten Lochfilters gleichen Außendurchmesser hat.

2. Vorrichtung nach Anspruch 1, dadurch gekennzeichnet, daß der Filterabschnitt (22) aus Ringen (25) zusammengesetzt ist, die am Umfang die Durchtrittsöffnungen (31) aufweisen, die in Sammelkanäle (32, 33) münden, welche in den Ringen (25) vorhanden sind und in tangentialer und axialer Richtung verlaufen.

3. Vorrichtung nach Anspruch 2, dadurch gekennzeichnet, daß jeder Ring (25) mit einer mittigen Öffnung (26) auf einen die Ringe (25) durchsetzenden Dorn (27) des Gegenkolbens (5) aufgesteckt ist, wobei alle Ringe durch eine die Stirnfläche (28) des Gegenkolbens (5) bildende, am Dorn (27) befestigte Abschlußplatte (29) gehalten sind.

4. Vorrichtung nach Anspruch 2 oder 3, dadurch gekennzeichnet, daß alle Ringe (25) gleiche Form haben.

5. Vorrichtung nach einem der Ansprüche 1 bis 4, dadurch gekennzeichnet, daß die Wand des Preßraumes (2) zumindest ein Lochfilter (9, 10) hat, das aus einem dünnwandigen, von Rundlöchern durchsetzten Mantel (16) besteht, welche Rundlöcher mit ihren Achsen in mehreren, in Richtung der Lochfilterachse (19) gegeneinander versetzten Kreisen angeordnet sind, deren jeder konzentrisch zur Lochfilterachse (19) liegt, wobei zwischen je zwei solchen Kreisen an der Außenfläche des Mantels (16) eine umlaufende Verstärkungsrippe (20) angeordnet ist.

6. Vorrichtung nach Anspruch 5, dadurch gekennzeichnet, daß das Lochfilter (9, 10) einstückig ist.

## Claims

1. Apparatus for separating meat from bones, particularly for poultry parts, as carcasses of chickens or turkeys, by compressing the meat-bone-mass introduced into the cylindrical pressure chamber (2) of a press between a pressure piston (4) and a counter piston (5), with penetration openings (18) in the wall of the pressure chamber (2), through which openings the meat transformed into a paste-like condition by the pressure can penetrate, whereas the bones are retained, both pistons (4, 5) are movable in axial direction of the pressure chamber (2) and the counter piston (5), when moved away from the pressure piston (4), gives free an exit opening (6) for removal of the pressed bones from the pressure chamber (2), and wherein the counter piston (5) is provided with a closure section (21) having a greater diameter than the diameter of the pressure chamber (2) and a filter section (22) having further penetration openings (31) for paste-like meat and having a smaller diameter than the diameter of the pressure chamber (2), which filter section (22), in the closure position of the counter piston (5), enters the pressure chamber (2), on its periphery, however, is separated from the wall of the pressure chamber (2) by an annular space (24), characterized in that the penetration openings (18) in the wall of the pressure chamber (2) have, at least in the region of the counter piston (5), substantially circular cross section, that also the filter section (22) of the counter piston (5) has such penetration openings (31) on its periphery and that this filter section (22) has equal outer diameter measured over the axial length of its perforation filter formed by these penetration openings (31).

2. Apparatus according to claim 1, characterized in that the filter section (22) is composed of rings (25) provided with the penetration openings (31) on their periphery, which penetration openings merge into collecting channels (32, 33) provided in the rings (25) and extending in tangential and axial direction.

3. Apparatus according to claim 2, characterized in that each ring (25) is fixed by a central opening (26) on a mandrel (27) of the counter piston (5), which mandrel penetrates the rings (25), all rings being maintained by a closure plate (29) forming the front surface (28) of the counter piston (5) and being fixed on the mandrel (27).

4. Apparatus according to claim 2 or 3, characterized in that all rings (25) have the same shape.

5. Apparatus according to anyone of claims 1 to 4, characterized in that the wall of the pressure chamber (2) has at least one perforation filter (9, 10) consisting of a thin-walled jacket (16) penetrated by round perforations, which round perforations with their axes are disposed along a plurality of circles mutually displaced in direction of the axis (19) of the perforation filter, each of said circles being disposed concentrically with respect to the axis (19) of the perforation filter, a peripheral reinforcing rib (20) being provided between each two of said circles on the outer surface of the jacket (16).

6. Apparatus according to claim 5, characterized in that the perforation filter (9, 10) consists of one single piece.

## Revendications

1. Dispositif en vue de séparer la chair des os, en particulier, pour des morceaux de volaille tels que des carcasses de poules ou de dindes, en pressant la masse chair/os introduite dans le compartiment de pressage cylindrique (2) d'une presse entre un piston de pressage (4) et un piston opposé (5), la paroi du compartiment de pressage (2) comportant des ouvertures de passage (18) à travers lesquelles peut passer la chair amenée à l'état pâteux par la pression de pressage, cependant que les os sont retenus, les deux pistons (4, 5) pouvant se déplacer dans le sens axial du compartiment de pressage (2) et, lors de son mouvement dirigé à l'écart du piston de pressage (4), le piston opposé (5) libère une ouverture de sortie (6) pour l'évacuation des os pressés hors du compartiment de pressage (2), ce piston opposé (5) comportant une partie de fermeture (21) d'un diamètre supérieur à celui du compartiment de pressage (2), ainsi qu'une partie de filtration (22) comportant des ouvertures de passage supplémentaires (31) pour la chair à l'état pâteux, cette partie de filtration ayant un diamètre inférieur à celui du compartiment de pressage (2), cette partie de filtration (22) pénétrant dans le compartiment de pressage (2) lorsque le piston opposé (5) occupe la position de fermeture cependant que, sur sa périphérie, elle est séparée de la paroi du compartiment de pressage (2) par un espace annulaire (24), caractérisé en ce que les ouvertures de passage (18) pratiquées dans la paroi du compartiment de pressage (2) ont, du moins dans la zone du piston opposé (5), une section transversale essentiellement circulaire, la partie de filtration (22) du piston opposé (5) comportant également de telles ouvertures de passage (31) sur sa périphérie, cette partie de filtration (22) ayant le même diamètre extérieur sur la longueur axiale d'un filtre perforé formé par ces ouvertures de passage (31).

2. Dispositif selon la revendication 1, caractérisé en ce que la partie de filtration (22) est constituée d'anneaux (25) comportant, sur leur périphérie, les ouvertures de passage (31) débouchant dans des canaux collecteurs (32, 33) qui sont présents dans les anneaux (25) et qui s'étendent tant dans le sens tangentiel que dans le sens axial.

3. Dispositif selon la revendication 2, caractérisé en ce que chaque anneau (25) est enfiché, par une ouverture centrale (26), sur un mandrin (27) du piston opposé (5), ce mandrin traversant les anneaux (25), tous ces anneaux étant maintenus par une plaque de fermeture (29) formant la surface frontale (28) du piston opposé (5) et fixée au mandrin (27).

4. Dispositif selon la revendication 2 ou 3, caractérisé en ce que tous les anneaux (25) ont la même forme.

5. Dispositif selon une des revendications 1 à 4, caractérisé en ce que la paroi du compartiment de pressage (2) comporte au moins un filtre perforé (9, 10) constitué d'une enveloppe (16) à paroi mince percée de trous circulaires disposés avec leurs axes en plusieurs cercles mutuellement décalés dans le sens de l'axe (19) du filtre perforé, chacun de ces cercles étant disposé concentriquement par rapport à l'axe (19) du filtre perforé et, chaque fois entre deux de ces cercles, une nervure périphérique de renforcement (20) est disposée sur la surface extérieure de l'enveloppe (16).

6. Dispositif selon la revendication 5, caractérisé en ce que le filtre perforé (9, 10) est d'une seule pièce.

0 127 609

FIG.1

FIG.2

FIG.3

FIG.6

FIG.4

FIG.5